# EUROPEAN PATENT APPLICATION

(11) **EP 2 395 694 A2**
(43) Date of publication of application: **14.12.2011**
(21) Application number: 11169479.0
(22) Date of filing: 10.06.2011
(51) Int. Cl.: H04L 1/18

(54) **Radio network controller and communication control method**

(30) Priority: 10.06.2010 JP 2010133267
(71) Applicant: NTT DoCoMo, Inc., Tokyo 100-6150 (JP)
(72) Inventor: Tooyama, Hiroto, Tokyo 100-6150 (JP); Makino, Kouji, Tokyo 100-6150 (JP); Morihiro, Yoshifumi, Tokyo 100-6150 (JP); Hayashi, Takahiro, Tokyo 100-6150 (JP)
(74) Representative: HOFFMANN EITLE

(57) **Abstract**

A radio network controller 300 includes an RLC reset detection unit configured to detect a transmission disabling event during which transmission of data units to the mobile station via the radio link control layer is disabled, a list acquisition unit 309 configured to acquire a reception status list L1 allowing identification of a reception unconfirmed data unit which is a data having no confirmation of reception by a mobile station and a transmission control unit 311 configured to select the reception unconfirmed data unit on the basis of the reception status list L1 and to transmit the reception unconfirmed data unit thus selected and a data unit not yet transmitted to the mobile station, to the mobile station after the transmission disabling event is completed.

## Description

### BACKGROUND OF THE INVENTION

### 1. Field of the Intention

The present invention relates to a radio network controller and a communication control method for performing retransmission control in a radio link control layer for data units transmitted to a mobile station.

### 2. Description of the Related Art

Heretofore, in mobile communication systems such as UMTS (Universal Mobile Telecommunications System), retransmission control (automatic repeat request) of data units is performed in a radio link control (RLC) layer. The RLC layer is implemented in each of a radio network controller (RNC) and a mobile station (UE). The retransmission control of data units in the RLC layer is performed to prevent a data loss in a transmission path.

However, the RLC layer is reset when a re-establishment event of the RLC layer or a forwarding (inter-RAT data forwarding) event of data units from UMTS to LTE (Long Term Evolution) in response to handover of the mobile station occur. Thus, a data loss as mentioned above may not be prevented.

To solve this, specification has been made for data retransmission control using PDCP (Packet Data Convergence Protocol) positioned as a higher layer than the RLC layer (see 3GPP TS 25.323 Packet Data Convergence Protocol (PDCP) specification, December 2009, 3GPP, for example).

To utilize the retransmission control using PDCB, PDCP needs to be implemented in both the radio network controller and the mobile station. However, there are in fact many mobile stations with no PDCP implemented therein. This causes the problem of being unable to prevent a data loss in the case of the occurrence of a re-establishment event of the RLC layer or a forwarding event of data units to LTE.

### SUMMARY OF INVENTION

The present invention has been made in view of such circumstances, and an object thereof is to provide a radio network controller and a communication control method for effectively preventing a loss of data to be transmitted to a mobile station without relying on PDCP even when a re-establishment event of an RLC layer or a forwarding event of data units to LTE occur.

An aspect of the present invention is summarized as a radio network controller (RNC 300) for performing retransmission control in a radio link control layer for data units transmitted to a mobile station (UE 100), comprising: an event detection unit (RLC reset detection unit 307) configured to detect a transmission disabling event (e.g., event for re-establishing the RLC layer) during which transmission of data units to the mobile station via the radio link control layer is disabled, before the transmission disabling event occurs; a list acquisition unit (list acquisition unit 309) configured to acquire a reception status list (reception status list L1) allowing identification of a reception unconfirmed data unit which is a data unit transmitted from the radio network controller to the mobile station but having no confirmation of reception by the mobile station; and a transmission control unit (transmission control unit 311) configured to select the reception unconfirmed data unit on the basis of the reception status list acquired by the list acquisition unit, and to transmit the reception unconfirmed data unit thus selected and a data unit not yet transmitted to the mobile station, to the mobile station after the transmission disabling event is completed.

in the aspect of the present invention mentioned above, the list acquisition unit may acquire a reception status list allowing identification of an unreceived data unit which is a data unit retransmitted from the radio network controller to the mobile station but not yet received by the mobile station; and the transmission control unit may select the unreceived data unit on the basis of the reception status list, and transmit the unreceived data unit thus selected and a data unit not yet transmitted to the mobile station, to the mobile station after the transmission disabling event is completed.

In the aspect of the present invention mentioned above, the data units may be service data units each containing a plurality of protocol data units; and if in-sequence guaranteed transmission for the service data units is designated, then based on the reception status list, the transmission control unit may set a protocol data unit not received by the mobile station as a start point, and transmit data units having been transmitted from the radio network controller to the mobile station, to the mobile station after the transmission disabling event is completed, the data units being all service data units having been transmitted to the mobile station with and subsequently to the start point protocol data unit.

In the aspect of the present invention mentioned above, the data units may be service data units each containing a plurality of protocol data units; and if in-sequence guaranteed transmission for the service data units is not designated, then based on the reception status list, the transmission control unit may transmit a service data unit which is a data unit having been transmitted from the radio network controller to the mobile station and containing a protocol data unit not received by the mobile station, to the mobile station after the transmission disabling event is completed.

In the aspect of the present invention mentioned above, the transmission disabling event may be an event for re-establishing the radio link control layer.

In the aspect of the present invention mentioned above, the transmission disabling event may be an event for forwarding the data units to a different mobile communication system using a different radio access technology (e.g., LTE).

In the aspect of the present invention mentioned above, the transmission control unit may forward the selected reception unconfirmed data unit to the different mobile communication system.

In the aspect of the present invention mentioned above, the radio network controller may further comprise: a buffer (buffer 303) configured to store a predetermined number of the data units; and a buffer control unit (buffer control unit 313) configured to control the buffer such that the buffer stores the reception unconfirmed data unit until it is confirmed that the reception unconfirmed data unit is received by the mobile station.

Another aspect of the present invention is summarized as a communication control method of performing retransmission control in a radio link control layer for data units transmitted to a mobile station, the method comprising the steps of: detecting a transmission disabling event during which transmission of data units to the mobile station via the radio link control layer is disabled, before the transmission disabling event occurs; acquiring a reception status list allowing identification of a reception unconfirmed data unit which is a data unit transmitted from the radio network controller to the mobile station but having no confirmation of reception by the mobile station; and selecting the reception unconfirmed data unit on the basis of the reception status list thus acquired, and transmitting the reception unconfirmed data unit thus selected and a data unit not yet transmitted to the mobile station, to the mobile station after the transmission disabling event is completed.

According to the aspects of the present invention, a loss of data to be transmitted to a mobile station can be effectively prevented without relying on PDCP even when a re-èstablishment event of an RLC layer or a forwarding event of data units to LTE occur.

### BRIEF DESCRIPTION OF THE DRAWINGS

Fig. 1 is an overall schematic configuration diagram of a mobile communication system 1 of an embodiment of the present invention.
Fig. 2 is a functional block configuration diagram of an RNC 300 (radio network controller) of the embodiment of the present invention.
Fig. 3 is a diagram showing stacks of protocols used in a UE 100, a NodeB 200, and an eNodeB 250 of the embodiment of the present invention.
Fig. 4 shows a flow of an operation of the embodiment of the present invention performed by the RNC 300 to retransmit data units addressed to the UE 100.
Fig. 5 is a diagram showing an example of a retransmission data selecting process in S30 shown in Fig. 4.
Fig. 6 is a diagram showing another example of the retransmission data selecting process in S30,shown in Fig. 4.
Fig. 7 is a diagram showing an example of data unit retransmission of the embodiment of the present invention in a case where the above-mentioned operation of the RNC 300 is applied for a re-establishment event of an RLC layer.
Fig. 8 shows the example of the data unit retransmission of the embodiment of the present invention in more detail.

### DESCRIPTION OF THE PREFERRED EMBODIMENTS

Next, embodiments of the present invention will be described. Note that in following description of the drawings, identical or similar portions are denoted by identical or similar reference signs. It should be also noted that the drawings are merely schematic and that dimensional ratios and the like may be different from actual ones.

Accordingly, specific dimensions and the like should be determined in consideration of the following description. In addition, some drawings may include portions which differ from one drawing to another in terms of the dimensional relationship and ratio, as a matter of course.

### (1) Overall Schematic Configuration of Mobile Communication System

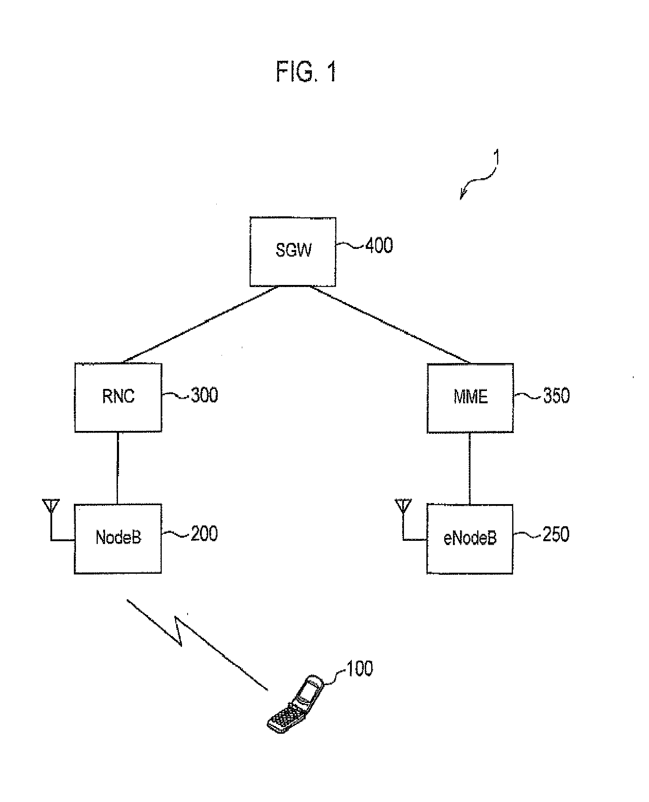

Fig. 1 is an overall schematic configuration diagram of a mobile communication system 1 of an embodiment. The mobile communication system 1 is formed of two mobile communication systems differing from each other in radio access technology (RAT). Specifically, the mobile communication system 1 is formed of UMTS (Universal Mobile Telecommunications System) and LTE (Long Term Evolution) . It should be noted that illustration of apparatuses irrelevant to the present invention is omitted in Fig. 1.

The UMTS includes a NodeB 200 and a radio network controller 300 (hereinafter, RNC 300). The LTE includes an eNodeB 250 and an MME 350. A mobile station 100 (hereinafter, UE 100) is configured to perform radio communications with the NodeB 200 or the eNodeB 250. Moreover, the UE 100 is capable of performing handover from the UMTS to the LTE or handover from the LTE to the UMTS.

No PDCP (Packet Data Convergence Protocol) is implemented in the UE 100. Thus, retransmission control of data addressed to the UE 100 is performed by ARQ in a radio link control (RLC) layer.

The RNC 300 and MME 350 are connected to a signaling gateway (hereinafter, SGW 400) . Data addressed to the UE 100 is forwarded from the SGW 400 to either the UMTS or the LTE depending on in which area the UE 100 is present.

### (2) Functional Block Configuration of Radio network controller

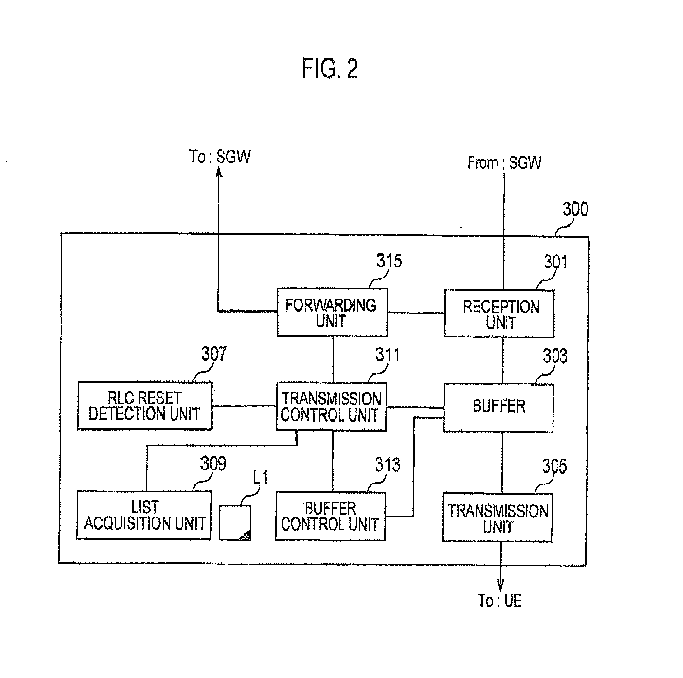

Fig. 2 is a functional block configuration diagram of the RNC 300 (radio network controller). As shown in Fig. 2, the RNC 300 includes a reception unit 301, a buffer 303, a transmission unit 305, an RLC reset detection unit 307, a transmission control unit 311, a list acquisition unit 309, a buffer control unit 313, and a forwarding unit 315. Specifically, in this embodiment, the RNC 300 is configured to perform retransmission control in the RLC layer for data units transmitted to the UE 100.

The reception unit 301 is configured to receive data addressed to the UE 100 and forwarded from the SGW 400 and output the received data to the buffer 303 as data units in a predetermined format.

The buffer 303 is a memory configured to temporarily store data outputted from the reception unit 301. The buffer 303 stores a predetermined number of data units, specifically, service data units (hereinafter, SDUs) each containing multiple protocol data units (hereinafter, PDUs).

The transmission unit 305 is configured to transmit SDUs read from the buffer 303 to the UE 100 via the NodeB 200. The transmission unit 305 uses the RLC layer or the like for transmitting the SDUs to the UE 100.

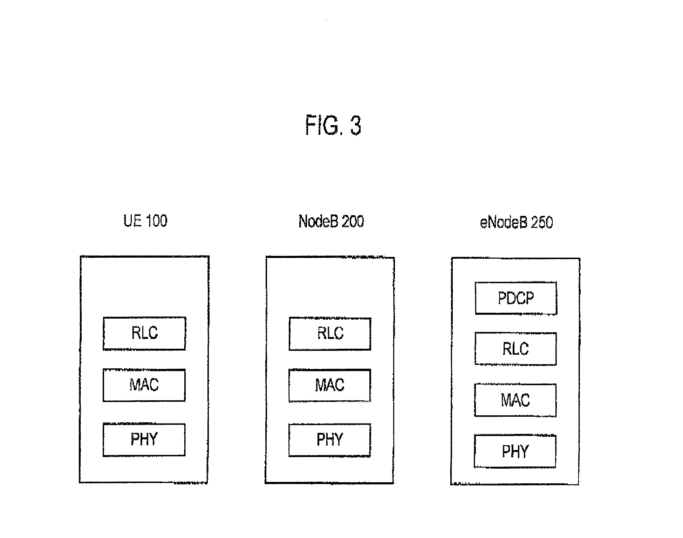

Here, Fig. 3 shows a protocol stack used in the UE 100, the NodeB 200, and eNodeB 250. As shown in Fig. 3, a PHY layer, a MAC layer positioned above the PHY layer, and the RLC layer positioned above the MAC layer are implemented in both of the UE 100 and the NodeB 200. In contrast, a PDCP (Packet Data Convergence Protocol) layer positioned above the RLC layer is additionally implemented in the eNodeB 250.

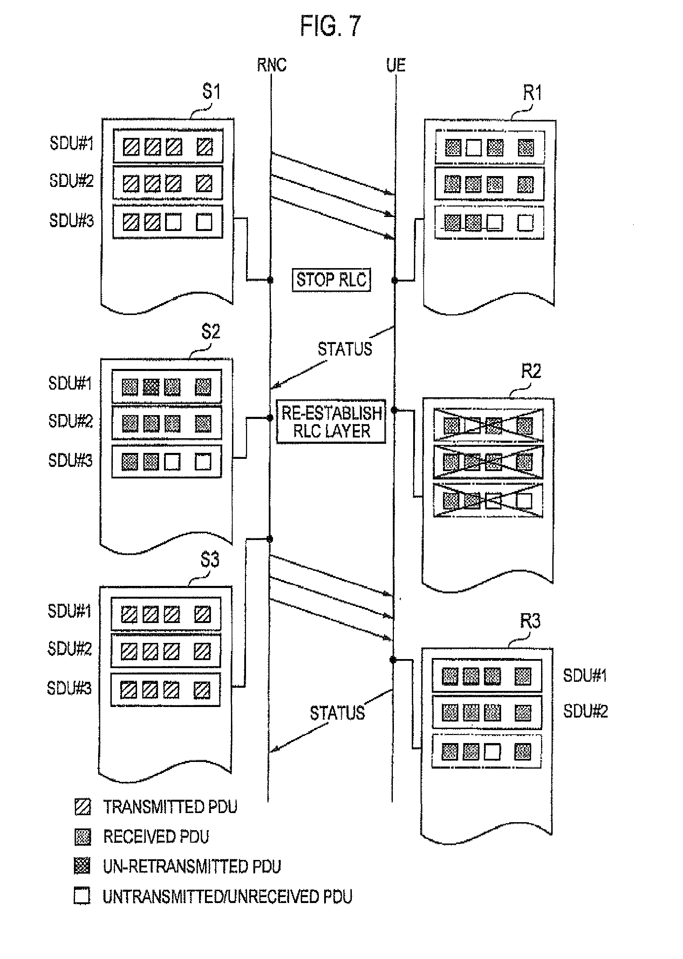

Fig. 7 shows an example of transmission of SDUs from the RNC 300 to the UE 100. As shown in Fig. 7, data addressed to the UE 100 is transmitted by the RNC 300 to the UE 100 on an SDU basis. Note that the content of Fig. 7 will be described further in a later section.

This embodiment uses retransmission control based on an acknowledge mode (AM) in the RLC layer. In the AM, data packets (PDUs) received from a higher layer build SDUs. The SDUs are each formed of multiple acknowledge mode PDUs (AMD PDUs). Moreover, in the AM, if the UE 100 has not received AMD PDUs, the AMD PDUs are retransmitted.

The RLC reset detection unit 307 is configured to detect reset of the RLC layer. Specifically, the RLC reset detection unit 307 detects a transmission disabling event during which transmission of SDUs to the UE 100 via the RLC layer is disabled. In particular, the RLC reset detection unit 307 detects that the transmission disabling event is about to occur before the transmission disabling event occurs. In this embodiments, the RLC reset detection unit 307 forms an event detection unit.

To be more specific, the RLC reset detection unit 307 detects a re-establishment event of the RLC layer. The RLC reset detection unit 307 also detects a forwarding (inter-RAT data forwarding) event of data units to a different mobile communication system using a different radio access technology. The re-establishment corresponds to the switching of the size of the PDU by the RLC protocol or the resetting of the RLC protocol, for example.

Moreover, the inter-RAT data forwarding may occur when the UE 100 performs handover from the UMTS to the LTE, for example.

The list acquisition unit 309 is configured to acquire a reception status list L1 which allows identification of a reception unconfirmed data unit, the reception status list L1 being acquired from the UE 100. The reception status list L1 can be defined by an SUFI in each STATUS PDU transmitted from the UE 100.

The reception status list L1 contains information that allows identification, of a reception unconfirmed data unit which is a data unit (PDU) transmitted from the RNC 300 to the USE 100 but having no confirmation of reception by the UE 100. The reception unconfirmed data unit refers to: (a) a PDU which has not been reported by the-UE 100 through the STATUS PDU; (b) a PDU which has been retransmitted based on the acquired' reception status list L1 but for which an ACK has not been received from the UE 100; or (c) a PDU which has not yet been retransmitted after the acquisition of the first reception status list L1.

The list acquisition unit 309 is also capable of acquiring a reception status list L1 that allows identification of an unreceived data unit which is a data unit transmitted Or retransmitted from the RNC 300 to the UE 100 but not yet received by the UE 100. The unreceived data unit refers to the reception unconfirmed data unit (c) mentioned above, i.e., a PDU which has not yet been retransmitted after the acquisition of the first reception status list L1.

The transmission control unit 311 is configured to control data units which are addressed to the UE 100 and are to be transmitted or retransmitted to the UE 100. Specifically, the transmission control unit 311 selects a reception unconfirmed data unit on the basis of the reception status list L1 acquired by the list acquisition unit 309. Further, the transmission control unit 311 transmits the selected reception unconfirmed data unit and data units not yet transmitted to the UE 100, to the UE 100 after a transmission disabling event is completed.

The transmission control unit 311 is also capable of selecting an unreceived data unit on the basis of the reception status list L1 and transmitting the selected unreceived data unit and data units not yet transmitted to the UE 100, to the UE 100 after a transmission disabling event is completed.

The transmission control unit 311 is capable of determining whether or not retransmission should be performed on an SDU basis. Based on the determination result, the transmission control unit 311 re-divides the corresponding SDUs into PDUs and retransmits the SDU containing the PDU that should be retransmitted. Note that a method of retransmitting data units by the transmission control unit 311 will be described further in a later section.

The buffer control unit 313 is configured to control a data unit temporarily stored in the buffer 303. Specifically, the buffer control unit 313 controls the buffer 303 such that it will store a reception unconfirmed data unit until it is confirmed that the reception unconfirmed data unit is received by the UE 100. Note that the buffer control unit 313 may control the buffer 303 such that it will store an unreceived data unit until it is confirmed that the unreceived data unit is received by the UE 100.

The forwarding unit 315 is configured to forward data units addressed to the UE 100 to the LTE on the basis of an instruction from the transmission control unit 311. Specifically, the forwarding unit 315 forwards data units addressed to the UE 100 to the LTE upon detection of an inter-RAT data forwarding event.

### (3) Operation of Radio network controller

An operation of the aforementioned RNC 300 (radio network controller) will be described next. Specifically, an operation performed by the RNC 300 to retransmit data units addressed to the UE 100 will be described.

### (3.1) Overall operation flow

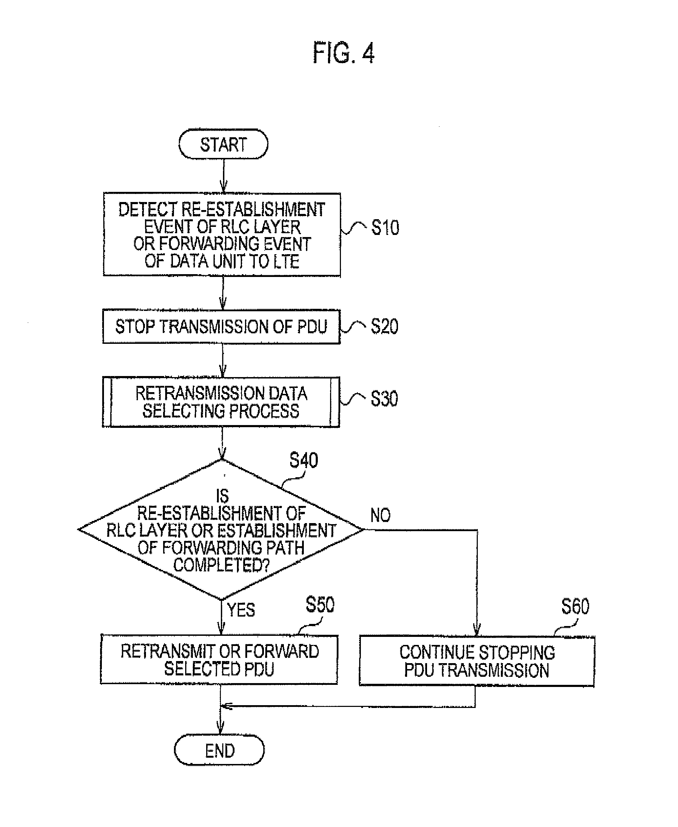

Fig. 4 shows a flow of an operation performed by the RNC 300 to retransmit data units addressed to UE 100. As shown in Fig. 4, in step S10, the RNC 300 detects a re-establishment event of the RLC layer or a forwarding (inter-RAT data forwarding) event of data units to the LTE.

In this embodiment, each data unit (PDU) is managed by classifying it as one of statuses of: (i) transmitted; (ii) untransmitted; (iii) delivery confirmed (LSN); (iv) delivery confirmed (smaller sequence number than that in the list); (v) un-retransmitted after receiving the list; and (vi) retransmitted (one or more times) after receiving the list. Note that in conventional techniques, each individual PDU is generally managed by classifying it as one of statues of: transmitted; untransmitted; delivery confirmed (LSN) ; and LIST received.

In step S20, to prepare for any of the above-mentioned events, the RNC 300 stops transmission (including retransmission) of PDUs in the RLC layer slightly before the event.

Note that upon receiving the STATUS PDUs from the UE 100 after stopping the transmission of the data units, the RNC 300 updates the statuses to "delivery confirmed (LSN)," "delivery confirmed (smaller sequence number than that in the list)," or "un-retransmitted after receiving the list."

As mentioned above, the re-establishment occurs due to the switching of the size of the PDU, or the like. The switching of the size of the PDU is performed after the UE 100 instructs the RNC 300 by following an RRC procedure and receives a response from the RNC 300. In addition, the inter-RAT data forwarding is performed after a forwarding path to the LTE is established.

In step S30, the RNC 300 performs a process of selecting retransmission data. Details of this retransmission data selecting process will be described in a later section.

In step S40, the RNC 300 determines whether or not the re-establishment of the RLC layer or the establishment of the forwarding path is completed.

If the rs-establishment of the RLC layer or the establishment of the forwarding path is completed (YES in step S40), then in step S50, the RNC 300 retransmits the selected PDUs (reception unconfirmed data units) to the UE 100 via the NodeB 200 (in a case of the re-establishment).

In addition, the RNC 300 forwards the selected PDUs (reception unconfirmed data units) to the.LTE (different mobile communication system) via the forwarding path.

If the re-establishment of the RLC layer or the establishment of the forwarding path is not yet completed (NO in step S40), then in step S60, the RNC 300 continues to stop the PDU transmission.

### (3.2) Example 1 of data unit selecting process

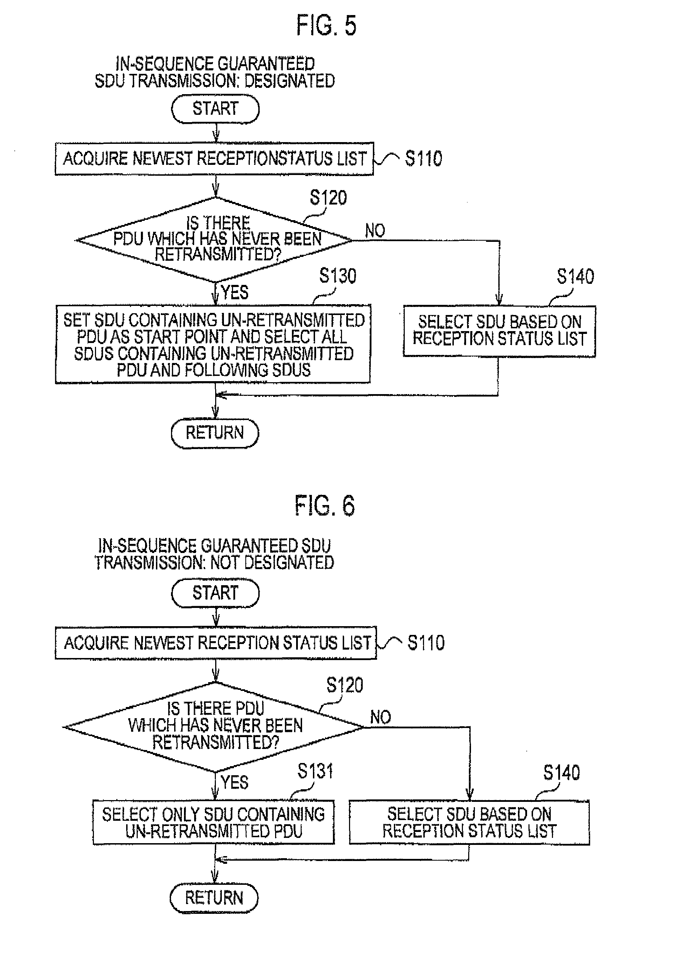

Fig. 5 shows an example of the retransmission data selecting process in step S30 shown in Fig. 4. Specifically, Fig. 5 shows a flow of the retransmission data selecting process in a case where the sequence of transmission of SDUs is guaranteed (in-sequence guaranteed transmission: designated) -

As shown in Fig. 5, in step S110, the RNC 300 acquires the newest reception status list L1 from the UE 100.

In step S120, the RNC 300 determines whether or not there is a PDU which has never been retransmitted to the UE 100, on the basis of the acquired reception status list L1.

If there is a PDU which has never been retransmitted to the UE 100 (YES in step S120), then in step S130, the RNC 300 sets the PDU as a start point and selects all the SDUs transmitted with and subsequently to the PDU as data units to be retransmitted. Note that the SDU containing the start point PDU is a retransmission target as well.

The reason for selecting such SDUs is that when the sequence of transmission of the SDUs is guaranteed, the reception by the UE 100 is never confirmed for those SDUs appearing later in time than the SDU containing, out of the PDUs listed in the reception status list L1., the PDU which has never been retransmitted.

That is, if in-sequence guaranteed SDU transmission is designated, then based on the reception status list L1, the RNC 300 (transmission control unit 311) sets the PDU not received by the UE 100 as a start point, and transmits, or retransmits to be precise, data units having been transmitted from the RNC 300 to the UE 100, to the UE 100 after a transmission disabling event is completed, the data units being all the SDUs having been transmitted to the UE 100 with and subsequently to the start point PDU.

If there is not any PDU which has never been retransmitted to the UE 100 (NO in step S130), then in step S140, the RNC 300 selects SDUs not received by the UE 100 on the basis of the reception status list L1.

### (3.3) Example 2 of data unit selecting process

Fig. 6 shows another example of the data unit selecting process in step S30 shown in Fig. 4. Specifically, Fig. 5 shows a flow of the retransmission data selecting process in a case where the sequence of transmission of SDUs is not guaranteed (in-sequence guaranteed transmission; not designated).

Note that a process in step S131 is the only difference from the flow shown in Fig, 5. As shown in Fig. 6, in step S131, only an SDU containing a PDU which has never been retransmitted to the UE 100 is selected as a data unit to be retransmitted.

That is, if the in-sequence guaranteed SDU transmission is not designated, then based on the reception status list L1, the RNC 300 (transmission control unit 311) selects the PDU not received by the UE 100, and transmits the SDU which is a data unit having been transmitted from the RNC 30.0 to the UE 100 and containing the PDU not received by the UE 100, to the UE 100 after a transmission disabling event is completed.

The reason for selecting such an SDU is that only the SDU containing the PDU listed in the reception status list L1 needs to be retransmitted if the sequence of transmission of the SDUs is not guaranteed. The reason for limiting the PDU to a PDU which has never been retransmitted is that if the PDU has been retransmitted once, it is impossible to confirm that the PDU is not yet received by the UE 100, even when the reception status list L1 is received twice, due the characteristics of the RLC protocol. Specifically, there is a possibility that if the RNC 300 retransmits a data unit but the reception status list L1 is transmitted before the data unit is received by the UE 100, the reception is not reflected properly in the reception status list L1. For this reason, a data loss can be effectively prevented while avoiding redundant reception in which the UE 100 redundantly receives the same PDU (SDU).

### (3.4) Example of data unit retransmission

Fig. 7 shows an example of data unit retransmission in a case where the above-mentioned operation of the RNC 300 is applied for a re-establishment event of the RLC layer.

The example shown in Fig. 7 assumes that in-sequence guaranteed transmission is designated. Statuses S1 and S3 of SDUs at the RNC 300 indicate whether the SDUs have been transmitted or not. Statuses R1 to R3 of the SDUs at the UE 100 indicate whether the SDUs have been received or not. Note that those SDUs enclosed by solid lines indicate that all the PDUs contained in the SDUs have been received.

In addition, statuses S2 of the SDUs at the RNC 300 reflect the statuses R1 of the SDUs at the UE 100 on the basis of the STATUS PDUs (reception status list L1) transmitted from the UE 100. As shown in Fig. 7, the second PDU in the SDU #1 has failed to be received by the UE 100 and has not yet been retransmitted either. Thus, the RNC 300 starts data retransmission from the SDU #1 after the RLC layer is re-established.

In the conventional techniques, when a PDU fails to reach the UE 100 due to a transmission error, the UE 100 cannot build an SDU containing the PDU and therefore cannot provide the higher layer with part of data including and following the SDU to the higher layer. As a result, some PDUs are held in the RLC layer, and when the RLC layer is re-established, these held PDUs are discarded in this event.

On the other hand, in this embodiment, the UE 100 sets a PDU not received by the UE 100 as a start point and retransmits all the SDUs having been transmitted to the UE 100 with and subsequently to the start point PDU. Accordingly, an improvement is achieved in the amount of data loss occurring in a re-establishment event of the RLC layer or a forwarding (inter-RAT data forwarding) event of data units to a different mobile communication system.

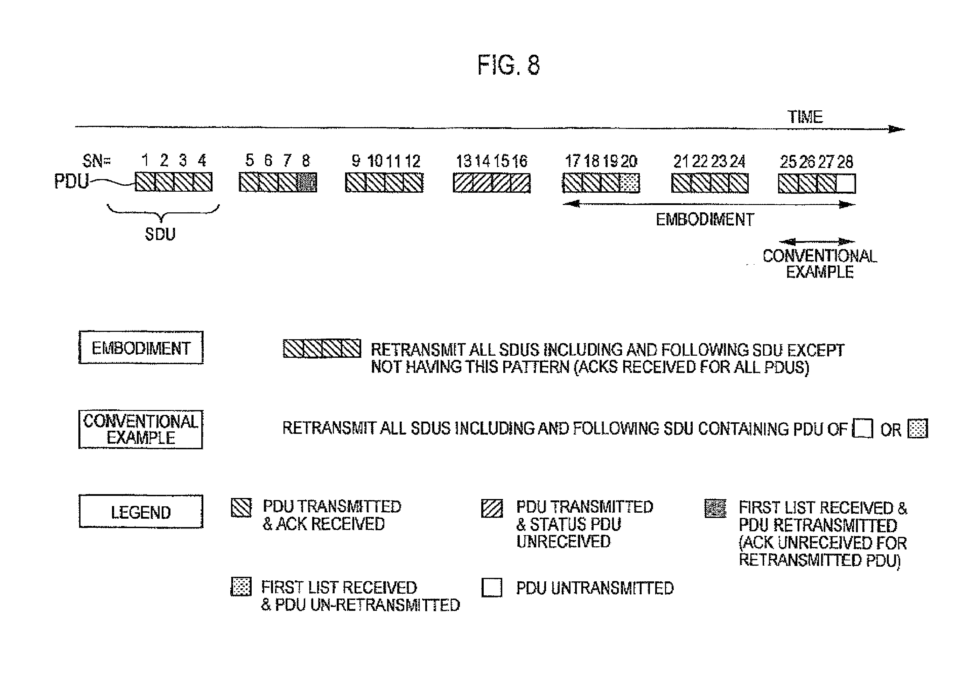

Fig. 8 shows the example of the data unit retransmission of this embodiment in more detail. Specifically, Fig. 8 shows the reception status of each PDU at the UE 100.

As shown in Fig. 8, in this embodiment the retransmission targets are SDUs other than SDUs whose PDUs are all received, i.e., all the SDUs including and following an SDU containing an undeceived data unit (PDU) that is not yet received by the UE 100 (see "EMBODIMENT" in Fig. 8) . Specifically, the retransmission targets are all the SDUs (PDUs with SNs #17 to #28) including and following an SDU formed of PDUs with SNs #17 to #20 (the PDU #20 is left un-retransmitted) .

On the other hand, in the conventional techniques, the retransmission target is an SDU containing either a PDU left un-retransmitted after receiving the reception status list L1 or an untransmitted PDU.

Note that as shown in Fig. 8, the RNC 300 may set, as the retransmission targets or the forwarding targets to the LTE, all the SDUs including and following an SDU containing a PDU which has been transmitted but whose STATUS PDU has not yet been received or a PDU which has been retransmitted on the basis of the reception status list L1 but whose ACK regarding the retransmission has not yet been received, i.e., a reception unconfirmed data unit (in the case where in-sequence guaranteed transmission is designated). The RNC 300 may also set only the SDU containing the reception unconfirmed data unit as the retransmission target or the forwarding target (in the case where the in-sequence guaranteed transmission is not designated).

### (4) Advantageous Effects

As mentioned above, with the RNC 300, an improvement is achieved in data loss occurring in a re-establishment event of the RLC layer or a forwarding (inter-RAT data forwarding) event of data units to a different mobile communication system.

Specifically, the RNC 300 selects an unreceived data unit (or a reception unconfirmed data unit) which is a data unit transmitted or retransmitted from the RNC 300 to the UE 100 but has not yet received by the UE 100, on the basis of the reception status list L1. Further, the RNC 300 transmits the selected unreceived data unit and data units not yet transmitted to the UE 100, to the UE 100 after a transmission disabling event (a re-establishment event of the RLC layer or a forwarding event of data units to the LTE) is completed.

Accordingly, a loss of data to be transmitted to the UE 100 can be effectively prevented even when a transmission disabling event occurs. Moreover, the RNC 300 can achieve data unit retransmission that does not rely on a higher layer protocol such as the PDCP, thereby being applicable to the UE 100 with no PDCP implemented therein.

In a conceivable method of avoiding a data loss upon the occurrence of a transmission disabling event as above, an SDU having no confirmation of delivery to the UE 100 may be set as the retransmission target or the forwarding target to the LTE even if the SDU has been once transmitted as PDUs. However, there is a concern in this case that the UE 100 receives the same PDUs (SDU) redundantly. Thus, the above method is not preferable. The RNC 300, on the other hand, can prevent a data loss while avoiding the UE 100 receiving the same PDUs (SDU) redundantly.

In this embodiment, if in-sequence guaranteed SDU transmission is designated, a PDU not received by the UE 100 is set as a start point, and all the SDUs having been transmitted to the UE 100 with and subsequently to the start point PDU are transmitted to the UE 100 after a transmission disabling event is completed. Moreover, if the in-sequence guaranteed SDU transmission is not designated, only the SDU containing the PDU not received by the UE 100 is transmitted to the UE 100 after the transmission disabling event is completed. By adjusting to the SDU transmission mode, the amount of data loss can be reduced more effectively.

in this embodiment, the buffer 303 is controlled to store an unreceived data unit (or a reception unconfirmed data unit) until the unreceived data unit is received by the UE 100. That is, in this embodiment, PDUs left untransmitted and held during re-establishment of the RLC layer will not be discarded, unlike the conventional techniques. Accordingly, data units having a possibility of being retransmitted can be securely stored, whereby the amount of data loss can be reduced more effectively.

### (5) Other Embodiments

Hereinabove, the contents of the present invention has been disclosed by way of an embodiment of the present invention. However, it should not be understood that the description and drawings constituting a part of this disclosure are intended to limit the present invention. From this disclosure, various alternative embodiments should be apparent to those skilled in the art.

For example, in the embodiment mentioned above, the buffer 303 is controlled to store an unreceived data unit until the unreceived data unit is received by the UE 100. However, such control is not necessarily needed.

In the embodiment mentioned above, the retransmission target SDU is changed depending on whether the in-sequence guaranteed SDU transmission is designated or not. However, such an operation is not necessarily needed.

In the embodiment mentioned above, the description is given taking UMTS and LTE as an example. However, the mobile communication systems to which the present invention is applicable are not limited to UMTS and LTE.

Moreover, if PDCP is implemented in the UE 100, the RNC 300 may be provided with a determination logic that performs a PDCP SN synchronization procedure instead of performing a retransmission operation as mentioned above.

As described, the present invention includes various embodiments and the like that are not described herein, as a matter of course. Accordingly, the technical scope of the present Invention is defined solely by the specified matters in the invention according to the claims that are appropriate from the above description.

Note that the entire contents of the Japanese Patent Application No. 2010-133267, filed on June 10, 2010 are incorporated herein by reference.

## Claims

1. A radio network controller for performing retransmission control in a radio link control layer for data units transmitted to a mobile station, comprising:
an event detection unit configured to detect a transmission disabling event during which transmission of data units to the mobile station via the radio link control layer is disabled, before the transmission disabling event occurs;
a list acquisition unit configured to acquire a reception status list allowing identification of a reception unconfirmed data unit which is a data unit transmitted from the radio network controller to the mobile station but having no confirmation of reception by the mobile station; and
a transmission control unit configured to select the reception unconfirmed data unit on the basis of the reception status list acquired by the list acquisition unit,
and to transmit the reception unconfirmed data unit thus selected and a data unit not yet transmitted to the mobile station, to the mobile station after the transmission disabling event is completed.

2. The radio network controller according to claim 1, wherein
the list acquisition unit acquires a reception status list allowing identification of an undeceived data unit which is a data unit retransmitted from the radio network controller to the mobile station but not yet received by the mobile station, and
the transmission control unit selects the unreceived data unit on the basis of the reception status list, and transmits the unreceived data unit thus selected and a data unit not yet transmitted to the mobile station, to the mobile station after the transmission disabling event is completed.

3. The radio network controller according to claim 1, wherein
the data units are service data units each containing a plurality of protocol data units, and
if in-sequence guaranteed transmission for the service data units is designated, then based on the reception status list, the transmission control unit sets a protocol data unit not received by the mobile station as a start point, and transmits data units having been transmitted from the radio network controller to then mobile station, to the mobile station after the transmission disabling event is completed, the data units being all service data units having been transmitted to the mobile station with and subsequently to the start point protocol data unit.

4. The radio network controller according to claim 1, wherein the data units are service data units each containing a plurality of protocol data units, and
if in-sequence guaranteed transmission for the service data units is not designated, then based on the reception status list, the transmission control unit transmits a service data unit which is a data unit having been transmitted from the radio network controller to the mobile station and containing a protocol data unit not received by the mobile station, to the mobile station after the transmission disabling event is completed.

5. The radio network controller according to claim 1, wherein the transmission disabling event is an event for re-establishing the radio link control layer.

6. The radio network controller according to claim 1, wherein the transmission disabling event is an event for forwarding the data units to a different mobile communication system using a different radio access technology.

7. The radio network controller according to claim 6, wherein the transmission control unit forwards the selected reception unconfirmed data unit to the different mobile communication system.

8. The radio network controller according to claim 1, further comprising:
a buffer configured to store a predetermined number of the data units; and
a buffer control unit configured to control the buffer such that the buffer stores the reception unconfirmed data unit until it is confirmed that the reception unconfirmed data unit is received by the mobile station.

9. A communication control method of performing retransmission control in a radio link control layer for data units transmitted to a mobile station, the method comprising the steps of:
detecting a transmission disabling event during which transmission of data units to the mobile station via the radio link control layer is disabled, before the transmission disabling event occurs;
acquiring a reception status list allowing identification of a reception unconfirmed data unit which is a data unit transmitted from the radio network controller to the mobile station but having no confirmation of reception by the mobile station; and
selecting the reception unconfirmed data unit on the basis of the reception status list thus acquired, and
transmitting the reception unconfirmed data unit thus selected and a data unit not yet transmitted to the mobile station, to the mobile station after the transmission disabling event is completed.
